# EUROPEAN PATENT SPECIFICATION

(11) **EP 1 433 932 B1**
(45) Date of publication and mention of the grant of the patent: **08.03.2006**
(21) Application number: 03029024.1
(22) Date of filing: 16.12.2003
(51) Int. Cl.: F01N 3/08, F01N 3/023, F01N 9/00, F02D 41/02

(54) **Device and method for freeing the catalyst of a diesel engine from the effect of sulfur poisoning**
Vorrichtung und Verfahren zur Schwefelentgiftung eines Katalysators einer Dieselbrennkraftmaschine
Dispositif et méthode de décontamination d'un catalyseur d'un moteur diesel contaminé au soufre

(30) Priority: 26.12.2002 JP 2002377232
(43) Date of publication of application: 30.06.2004
(73) Proprietor: NISSAN MOTOR COMPANY, LIMITED, Yokohama-shi, Kanagawa 221-0023 (JP)
(72) Inventor: Tabata, Munehiro, Isehara-shi Kanagawa 259-1137 (JP); Inoue, Takao, Yokohama-shi Kanagawa 233-0002 (JP)
(74) Representative: Grünecker, Kinkeldey, Stockmair & Schwanhäusser Anwaltssozietät

(56) References cited:
- EP-A- 1 086 741
- EP-A- 1 174 600
- DE-A- 19 850 757
- PATENT ABSTRACTS OF JAPAN vol. 018, no. 691 (M-1731), 26 December 1994 (1994-12-26) & JP 06 272541 A (TOYOTA MOTOR CORP), 27 September 1994 (1994-09-27)

## Description

This invention relates to a purification device for an exhaust gas of a diesel engine and to a method for controlling a purification device for an exhaust gas of a diesel engine.

JPO6-272541A published by the Japanese Patent Office in 1992, discloses an exhaust gas purification device wherein a diesel particulate filter (DPF) that traps particulate matter in the exhaust gas of a diesel engine and a NOx trap catalyst that traps NOx in the exhaust gas, are used.

The NOx trap catalyst also traps sulfur oxides (SOx) contained in the diesel fuel. This is referred to as sulfur poisoning. When sulfur poisoning occurs, the NOx trap ability of the catalyst decreases.

In the prior art, the NOx trapped by the NOx trap catalyst is first reduced, next, the DPF burns the trapped particulate matter, and the reducing agent concentration in the exhaust gas is then increased to eliminate the sulfur poisoning.

When the reducing agent concentration of the exhaust gas is increased, a large amount of particulate matter is discharged. Therefore, when a long time is spent on eliminating the sulfur poisoning, a large amount of particulate matter collects in the DPF by the time the sulfur poisoning has been eliminated.

In general, the diesel engine runs in a lean atmosphere. If a large amount of particulate matter collects in the DPF when the air-fuel ratio is returned to lean for the usual operation after the sulfur poisoning is eliminated, a problem arises. Specifically, if the temperature of the exhaust gas at this time is higher than the self-ignition temperature of the particulate matter, the particulate matter trapped by the DPF burns rapidly. As a result, when the temperature of the DPF exceeds a preferable range for performance, the particulate trap performance of the DPF decreases.
It is an objective of the present invention to provide a purification device for an exhaust gas of a diesel engine and a method for controlling a purification device for an exhaust gas of a diesel engine, wherein purification of exhaust gas can be carried out with high performance and high reliability.
According to the apparatus aspect of the present invention, that objective is solved by a purification device for an exhaust gas of a diesel engine according to independent claim 1.
Preferred embodiments of the present invention are laid down in the dependent claims.
According to the method aspect of the present invention that objective is also solved by the method for controlling a purification device for an exhaust gas of a diesel engine according to independent claim 12.
According to the present invention sulphur poisoning of the NOx catalyst can be eliminated while collecting of particulate matter in the filter can be prevented.
Hereinafter the present invention is illustrated and explained by means of preferred embodiments in conjunction with the accompanying drawings, in the drawings wherein:

FIG. 1 is a schematic diagram of a diesel engine exhaust gas purification device according to an embodiment,

FIG. 2 is a flowchart describing a sulfur poisoning elimination routine executed by a controller according to the embodiment,

FIG. 3 is a flowchart describing an air-fuel ratio control subroutine executed by the controller,

FIG 4 is a flowchart describing an air-fuel ratio control subroutine for regenerating a DPF executed by the controller,

FIGs. 5A-5E are timing charts that describe changes in an excess air ratio lambda (λ), a sulfur poisoning amount and a particulate matter collection amount due to execution of the sulfur poisoning elimination routine,

FiG. 6 is similar to FIG. 1, but showing a second embodiment,

FIG. 7 is similar to FIG. 1, but showing a third embodiment,

FIGs. 8A-8E are timing charts that describe changes in the excess air ratio λ. the sulfur poisoning amount and the particulate matter collection amount under the sulfur poisoning elimination control according to a fifth embodiment,

FIGs. 9A-9E are timing charts that describe changes in the excess air ratio λ, the sulfur poisoning amount and the particulate matter collection amount under the sulfur poisoning elimination control according to a sixth embodiment.

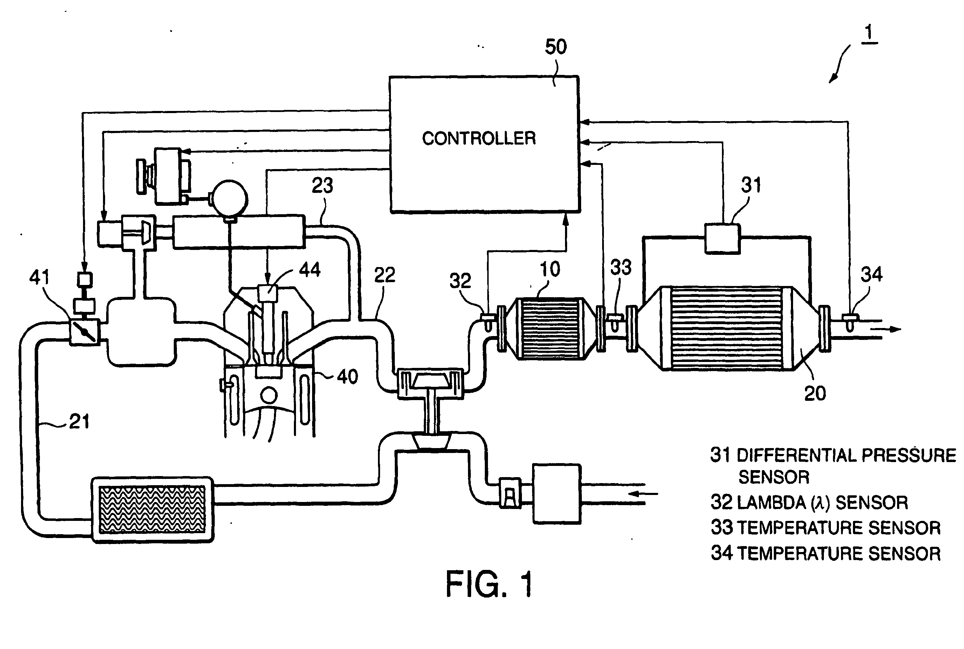

Referring to FIG. 1 of the drawings, a diesel engine 40 for vehicles rotates due to combustion of a gaseous mixture of air aspirated from an intake pipe 21 via a throttle 41, and diesel fuel injected from a fuel injector 44. The fuel is supplied to the fuel injector 44 by a common rail fuel system.

The exhaust gas due to combustion is discharged via an exhaust pipe 22. A part of the exhaust gas is recirculated to the intake pipe 21 via an exhaust gas recirculation (EGR) passage 23.

An exhaust gas purification device 1 is installed midway in the exhaust pipe 22.

The exhaust gas purification device 1 comprises a NOx trap catalyst 10 which traps NOx (nitrogen oxides) in the exhaust gas, and a diesel particulate filter (DPF) 20.

The NOx trap catalyst 10 contains a NOx trap agent that traps NOx. As the NOx trap agent, barium (Ba), magnesium (Mg) or cesium (Cs) can be used. The NOx trap catalyst 10 traps NOx contained in the exhaust gas corresponding to a lean air-fuel ratio due to the action of the trap agent. The trapped NOx is reduced by reducing agent components contained in exhaust gas corresponding to a rich air-fuel ratio, under the catalysis of the NOx trap catalyst 10, and is discharged.

The NOx trap catalyst 10 traps not only the NOx in the exhaust gas, but also SOx (sulfur oxides) as previously stated. When sulfur oxides collect in the NOx trap catalyst 10, the NOx trap ability decreases. This state is called sulfur poisoning. To eliminate the sulfur poisoning, it is necessary to increase the reducing agent components contained in the exhaust gas. For this purpose, it is necessary to make the exhaust gas composition correspond to a rich air-fuel ratio.

The DPF 20 is installed downstream of the NOx trap catalyst 10. The DPF 20 comprises a ceramic porous filter. The DPF 20 traps particulate matter in the exhaust gas. The trapped particulate matter burns due to the temperature rise of the exhaust gas, and is removed from the DPF 20. In the following description, the raising of the exhaust gas temperature to burn particulate matter trapped by the DPF 20 is referred to as the regeneration of the DPF 20. The regeneration of the DPF 20 is performed using the high temperature exhaust gas generated by the combustion of the air-fuel mixture at a lean air-fuel ratio.

The elimination of the sulfur poisoning of the NOx trap catalyst 10 and the regeneration of the DPF 20 are both performed by controlling the air-fuel ratio of the burning air-fuel mixture. The air-fuel ratio of the air-fuel mixture is determined by the air amount aspirated via the intake throttle 41 and the fuel injection amount of the fuel injector 44. The opening of the intake throttle 41 and the fuel injection amount of the fuel injector 44 are varied according to signals output by a controller 50.

The controller 50 comprises a microcomputer comprising a central processing unit (CPU), read-only memory (ROM), random access memory (RAM) and input/output (I/O) interface. The controller may also comprise plural microcomputers.

The controller 50 determines the fuel injection amount of the fuel injector 44 according to the required load, i.e., for example, according to a depression amount of an accelerator pedal with which the vehicle is provided. In normal operation of the engine 40, the controller 50 maintains the air-fuel ratio of the burning air-fuel mixture at a predetermined lean air-fuel ratio by increasing or decreasing the opening of the intake throttle 41 according to the fuel injection amount.

The controller 50, by controlling the air-fuel ratio to a predetermined rich air-fuel ratio, eliminates the sulfur poisoning of the NOx trap catalyst 10. During the elimination of sulfur poisoning, however, the controller 50 occasionally controls the air-fuel ratio to lean to perform the regeneration of the DPF 20 when the particulate matter collection amount has increased to a certain degree, thereby preventing an increase in the particulate matter collection amount of the DPF 20 due to the elimination of sulfur poisoning. When the particulate matter collection amount of the DPF 20 decreases as a result of the regeneration of the DPF 20, the air-fuel ratio is again controlled to a predetermined rich air-fuel ratio, and elimination of sulfur poisoning of the NOx trap catalyst 10 is continued.

To perform the above air-fuel ratio control, detection signals from various sensors are input to the controller 50.

These sensors include a differential pressure sensor 31 that detects the pressure difference of the exhaust gas at the inlet and outlet of the DPF 20, a λ sensor 32 which detects an excess air factor lambda (λ) of the air-fuel mixture from the oxygen concentration in the exhaust gas at the inlet of the NOx trap catalyst 10, a temperature sensor 33 which detects the inlet temperature of the DPF 20, and a temperature sensor 34 which detects the outlet temperature of the DPF 20.

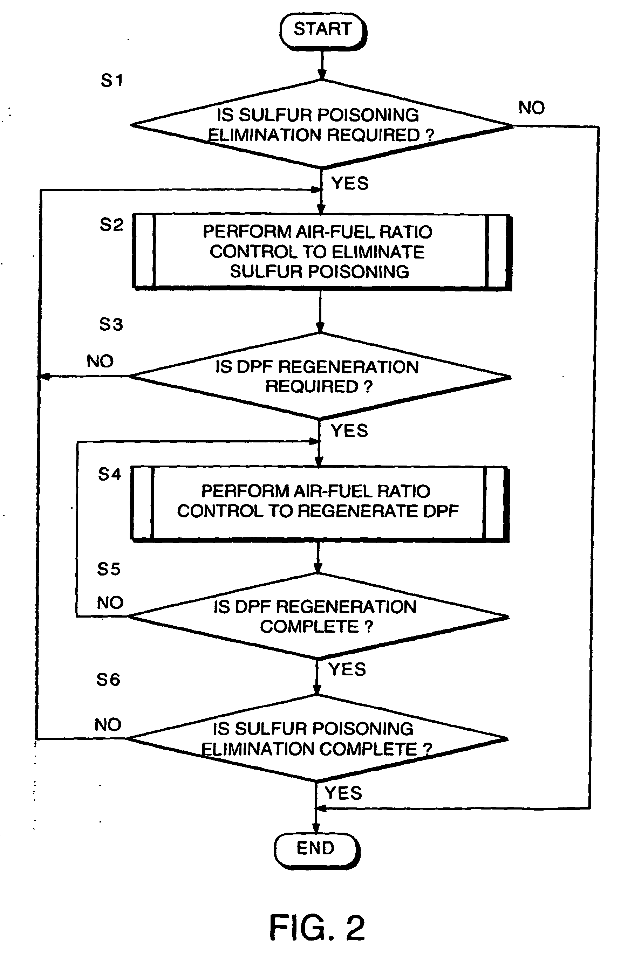

Next, referring to Fig. 2, a sulfur poisoning elimination routine executed by the controller 50 will be described.

This routine is always executed during running of the diesel engine 40. Specifically, when the controller 50 terminates the routine, the following execution of the routine is started immediately or after a predetermined time interval.

First, in a step S1, the controller 50 determines whether or not the sulfur poisoning elimination of NOx trap catalyst 10 is required. This determination is made not by directly detecting the sulfur poisoning amount of the NOx trap catalyst 10, but based on running data such as the vehicle travel distance, the fuel consumption and the travel time after the latest sulfur poisoning elimination. If it is determined that sulfur poisoning elimination of the NOx trap catalyst 10 is not required, the routine is terminated without further processing.

When it is determined that sulfur poisoning elimination of NOx trap catalyst 10 is required, the controller 50 performs the processing of a step S2 and further steps.

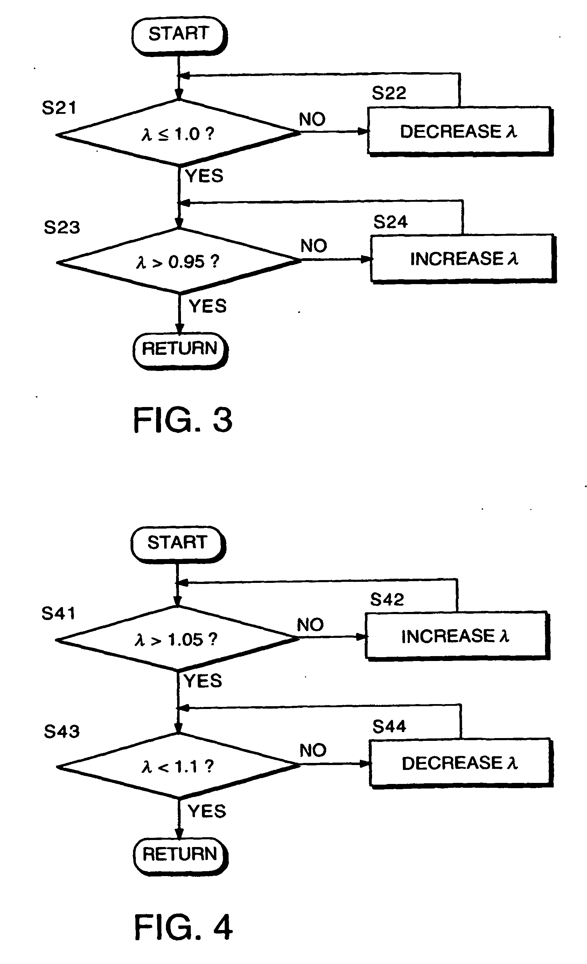

In the step S2, the controller 50 executes air-fuel ratio control to eliminate sulfur poisoning by using a subroutine shown in FIG. 3.

Referring to FIG. 3, the controller 50, in a step S21, determines whether or not the excess air factor λ of the air-fuel mixture detected by the λ sensor 32 is 1.0 or less. If the excess air factor λ of the air-fuel ratio is 1.0 or less, it means that the air-fuel ratio is equal to or richer than the stoichiometric air-fuel ratio.

If, as a result of this determination, the excess air factor λ is not 1.O or less, i.e., the air-fuel ratio is lean, the controller 50, in a step S22, decreases the excess air factor λ. This is done by decreasing the opening of the intake throttle 41 by a fixed amount. After the processing of the step S22, the controller 50 repeats the determination of the step S21. Thus, the controller 50 repeats the processing of the steps S21 and S22 until the excess air factor λ becomes 1.0 or less.

When the excess air factor λ becomes 1.0 or less, the controller 50 performs the processing of a step S23.

In the step S23, the controller 50 determines whether or not the excess air factor λ is larger than 0.95. When, as a result of this determination, the excess air factor λ is not larger than 0.95, the controller 50, in a step S24, increases the excess air factor λ. This is done by increasing the opening of the intake throttle 41 by a fixed amount. After the processing of the step S24, the controller 50 repeats the determination of the step S23. Hence, the controller 50 repeats the processing of the step S23 and S24 until the excess air factor λ exceeds the value of 0.95.

When the excess air factor λ becomes larger than 0.95 in the step S23, the controller 50 terminates the subroutine.

Due to the execution of this subroutine, the excess air factor λ is controlled to within a range that is less than 1.0 and larger than 0.95.

Referring again to FIG. 2, after controlling the excess air factor λ to within a range that is less than 1.0 and larger than 0.95 in the step S2, the controller 50, in a step S3, determines whether or not regeneration of the DPF 20 is required. This determination is performed by comparing the pressure difference between the inlet and outlet of the DPF 20 detected by the differential pressure sensor 31 with a first predetermined value.

Particulate matter which has collected in the DPF 20 is an obstacle to the flow of exhaust gas, and leads to pressure loss in the exhaust gas energy. As a result, the pressure difference between the inlet and outlet of the DPF 20 increases. The controller 50 determines that when this difference exceeds the first predetermined value, regeneration of the DPF 20 is required.

This first predetermined value is a value that is a predetermined amount larger than the pressure difference when the determination result of the step Sl is affirmative for the first time, i.e., the pressure difference when air-fuel ratio control to eliminate sulfur poisoning starts.

When it is determined in the step S3 that regeneration of the DPF 20 is not required, the controller 50 repeats the processing of the step S2 and step S3 until regeneration of the DPF 20 is required. In other words, until it is determined in the step S3 that regeneration of the DPF 20 is required, the excess air factor λ of the air-fuel mixture has a value within a range less than 1.0 and larger than 0.95, which corresponds to a rich air-fuel ratio.

As a result, sulfur oxides (SOx) which have collected in the NOx trap catalyst 10 are oxidized by reducing agent components in the exhaust gas increased by the rich air-fuel ratio, and elimination of the sulfur poisoning of the NOx trap catalyst 10 takes place.

On the other hand, when the reducing agent concentration in the exhaust gas increases, the particulate matter generation amount also increases.

As a result, in the step S3, when it is determined that regeneration of the DPF 20 is required, the controller 50, in a step S4, performs air-fuel ratio control to regenerate the DPF 20 using a subroutine shown in FIG. 4.

Referring to FIG. 4, the controller 50, firstly in a step S41, determines whether or not the excess air factor λ is larger than 1.05.

If the excess air factor λ is not larger than 1.05, in a step S42, the excess air factor λ is increased. This processing is performed by increasing the opening of the intake throttle 41 by a fixed amount. After the processing of the step S42, the controller 50 repeats the determination of the step S41. In this way, the controller 50 repeats the processing of the steps S41 and S42 until the excess air factor λ is larger than 1.05.

When the excess air factor λ becomes larger than 1.05, the controller 50 performs the processing of a step S43.

In the step S43, the controller 50 determines whether or not the excess air factor λ is less than 1.1.

If the excess air factor λ is not less than 1.1 the controller 50, in a step S44, decreases the excess air factor λ. This processing is performed by decreasing the opening of the intake throttle 41 by a fixed amount. After the processing of the step S44, the controller 50 repeats the determination of the step S43.

In this way, the controller 50 repeats the processing of the steps S43 and 44 until the excess air factor λ becomes less than 1.1.

When the excess air factor λ becomes less than 1.1 in the step S43, the controller 50 terminates the subroutine.

Due to the execution of this subroutine, the excess air factor λ is controlled to a range larger than 1.5 and less than 1.1.

Referring again to FIG 2, after the excess air factor λ is controlled to a range larger than 1.05 and less than 1.1 in the step S4, the controller 50, in a step S5, determines whether or not regeneration of the DPF 20 is complete. This is done by comparing the pressure difference between the inlet and outlet of the DPF 20 detected by the differential pressure sensor 31 with a second predetermined value.

When the particulate matter is burnt and is removed from the DPF 20, the exhaust gas flow resistance of the DPF 20 decreases, and the exhaust gas energy loss also decreases. As a result, the pressure difference between the inlet and outlet of the DPF 20 decreases. When the pressure difference drops below the second predetermined value, the controller 50 determines that regeneration of the DPF 20 is complete. The second predetermined value is set equal to the pressure difference when the determination result of the step S1 is affirmative for the first time, i.e., the pressure difference when air-fuel ratio control to eliminate sulfur poisoning starts.

Here, the basic concept of setting the first predetermined value and second predetermined value will be described. The regeneration control of the DPF 20 performed during this routine has the purpose of preventing increase of particulate matter collected in the DPF 20 due to the sulfur poisoning elimination control of the NOx trap catalyst 10. In other words, it is different from the ordinary regeneration control of the DPF 20 which effectively makes the particulate matter collection amount zero.

Therefore, the difference between the first predetermined amount and second predetermined amount may be set to be narrower than during ordinary regeneration control, and by burning particulate matter a little at a time within a short interval, excessive temperature rise of the DPF 20 is prevented.

If regeneration of the DPF 20 is not complete in the step S5, the controller 50 repeats the processing of the steps S4 and S5. In other words S5, the excess air factor λ is maintained within a range larger than 1.5 and less than 1.1, i.e., corresponding to a lean air-fuel ratio. As a result, the oxygen due to the lean air-fuel ratio promotes combustion of the particulate matter, and regeneration of the DPF 20 continues.

If it is determined in the step S5 that regeneration of the DPF 20 is complete, the controller 50, in a step S6, determines whether or not sulfur poisoning elimination is complete. This determination is performed by determining whether or not the total execution time of air-fuel ratio control for eliminating sulfur poisoning from the starting of the routine, i.e., the total continuation time of the air-fuel ratio state where the excess air factor λ is less than 1.0 and more than 0.95, has reached a predetermined time.

If the elimination of sulfur poisoning is not complete, the controller 50 repeats the processing of the steps S2-S6. When it is determined that the elimination of sulfur poisoning is complete, the controller 50 terminates the routine.

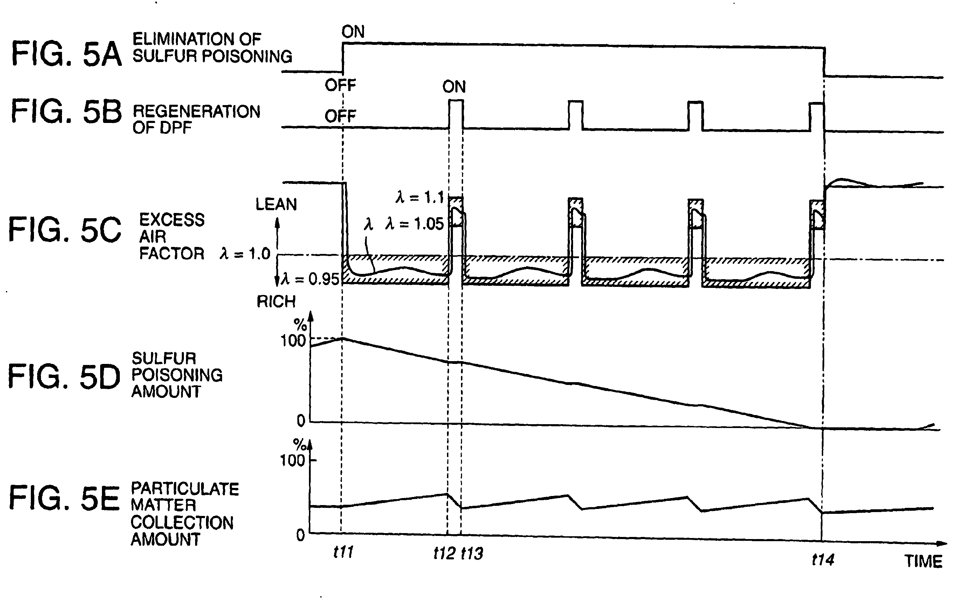

Next, referring to FIGs. 5A-5E, the variation of the excess air factor λ, sulfur poisoning amount and particulate matter collection amount due to execution of the above routine will be described.

At a time *t11,* if it is determined in the step S1 that the elimination of sulfur poisoning of the NOx trap catalyst 10 is required, the air-fuel ratio control to eliminate sulfur poisoning of the step S2 starts, and the excess air factor λ of the engine 40 is controlled to a rich air-fuel ratio region between 0.95 and 1.0 as shown in FIG. 5C. As a result, the sulfur poisoning amount falls as shown in FIG. 5D, and as the particulate matter discharge amount increases due to the rich air-fuel ratio, the particular matter collection amount of the DPF 20 increases as shown in FIG. 5E.

Here, FIGs. 5D and 5E respectively show the sulfur poisoning amount of the NOx trap catalyst 10 and particulate matter collection amount of the DPF 20 as percentages.

Regarding the sulfur poisoning amount, the poisoning amount when it is determined that elimination of poisoning is required, is taken as 100%, and the poisoning amount when the total execution time of the air-fuel ratio control for eliminating sulfur poisoning has reached the predetermined time, is taken as 0%.

Regarding the particulate matter collection amount, the state where the particulate matter trap ability of the DPF 20 is saturated, is taken as 100%, and the state where particulate matter has not collected in the DPF 20, is taken as 0%.

At a time *t12,* when the particulate matter collection amount has reached a value corresponding to the aforesaid first predetermined value, it is determined in the step S3 that regeneration of the DPF 20 is required. As a result, the air-fuel ratio control to regenerate the DPF 20 of the step S4 is performed, and the excess air factor λ of the engine 40 is controlled to a lean air-fuel ratio region where the excess air factor λ is between 1.05 and 1.1, as shown in FIG. 5C.

Due to this control, combustion of particulate matter which has collected in the DPF 20 is promoted as shown in FIG. 5E, and regeneration of the DPF 20 is performed. At a time *t13*, when the particulate matter collection amount in the DPF 20 decreases to a value corresponding to the aforesaid second predetermined value, it is determined that regeneration of the DPF 20 in the step S5 is complete. Next, it is determined whether or not elimination of sulfur poisoning in the step S6 is complete.

At the time *t13,* the elimination of sulfur poisoning is not complete as shown in FIG. 5D. Therefore, the air-fuel ratio control to eliminate sulfur poisoning of the step S2 is repeated.

Due to the air-fuel ratio control to regenerate the DPF 20, when the particulate matter collected in the DPF 20 burns, the combustion heat is transmitted to the NOx trap catalyst 10, and the temperature of the NOx trap catalyst 10 rises. This temperature rise of the NOx trap catalyst 10 has a favorable effect when promoting reduction of SOx in the NOx trap catalyst 10, on the next occasion when air-fuel ratio control is performed to eliminate sulfur poisoning.

In this way, by repeating air-fuel ratio control to eliminate sulfur poisoning and air-fuel ratio control to regenerate the DPF 20, the sulfur poisoning rate becomes zero, as shown in FIG. 5D.

Each time air-fuel ratio control to regenerate the DPF 20 is terminated, the controller 50 determines whether or not elimination of sulfur poisoning in the step S6 is complete. At a time *t14*, when it is determined that elimination of sulfur poisoning is complete, the controller 50 terminates the routine.

The interval when sulfur poisoning elimination control is ON from the time *t11* to the time t14 of FIG. 5A, corresponds to the effective routine execution period. Within the interval when sulfur poisoning elimination control is ON, air-fuel ratio control to eliminate sulfur poisoning and air-fuel ratio control to regenerate the DPF 20 are repeatedly performed in alternation.

As a result, at the time *t14,* sulfur poisoning is completely eliminated, and at the same time, the particulate matter collection amount in the DPF 20 is maintained at substantially the same level as at the time *t11.* Due to this control, sulfur poisoning elimination is performed without increasing the particulate matter collection amount.

The air-fuel ratio control to regenerate the DPF 20 shown in FIGs. 5B and 5C is performed to prevent the particulate matter collection amount of the DPF 20 from increasing due to elimination of sulfur poisoning as described above. Ordinary regeneration control of the DPF 20 is performed by a separate routine.

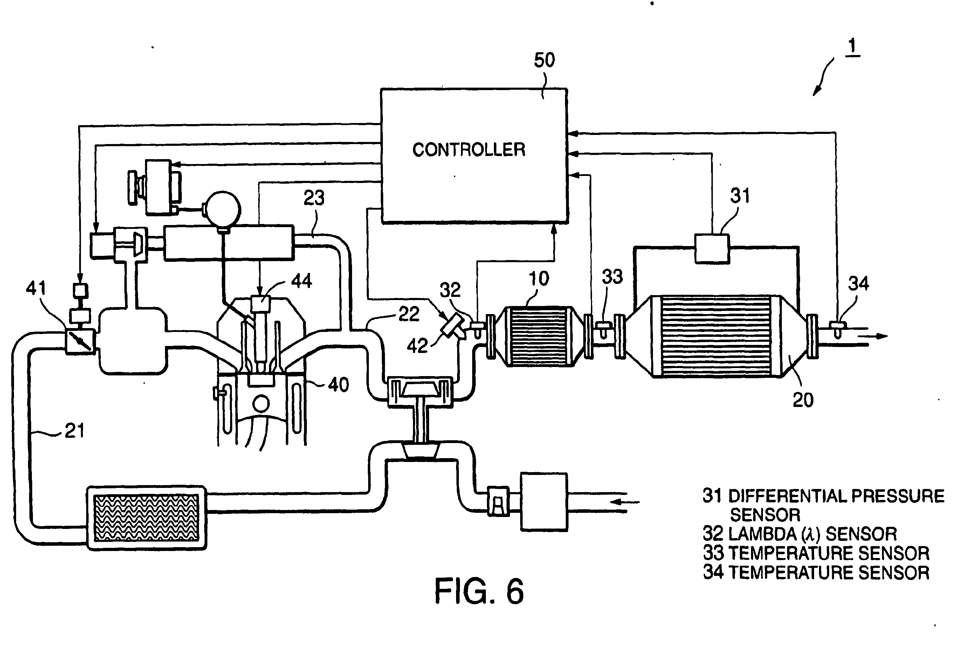

Next, referring to FIG. 6, a second embodiment will be described.

The exhaust gas purification device according to this embodiment comprises a fuel injector 42 upstream of the NOx trap catalyst 10 in the exhaust pipe 22. The fuel injector 42 injects fuel according to a signal from the controller 50 in an identical way to the fuel injector 44. The remaining features of the construction relating to the hardware of the exhaust gas purification device are identical to those of the first embodiment shown in FIG.1.

As in the first embodiment, the controller 50 performs elimination of sulfur poisoning of the NOx trap catalyst 10 by the routine of FIG. 2 and the subroutines of FIGs. 3 and 4.

However, in this embodiment, the operation of decreasing the excess air factor λ in the step S22 of FIG 3 and the step S44 of FIG. 4, is performed by a fuel injection from the fuel injector 42. By injecting fuel into the exhaust gas, reducing agent components in the exhaust gas are increased, and as a result, the same exhaust gas composition as when the excess air factor λ in the air-fuel mixture falls, is obtained.

In the same way, the operation of increasing the excess air factor λ in the step S24 of FIG. 3 and the step S42 of FIG. 4 is performed by stopping the fuel injection by the fuel injector 42. By stopping injection of fuel which was injected into the exhaust gas, reducing agent components in the exhaust gas decrease, and as a result, the same exhaust gas composition as when the excess air factor λ in the air-fuel mixture increases, is obtained.

In this embodiment, by injecting fuel directly into the exhaust gas, the reducing agent component concentration of the exhaust gas can be more precisely controlled. The air-fuel ratio of the air-fuel mixture supplied to the engine 40 is not changed, so sulfur poisoning elimination control of the NOx trap catalyst 10 can be performed without affecting the combustion of the engine 40 and without causing any fluctuation of the output torque of the engine 40.

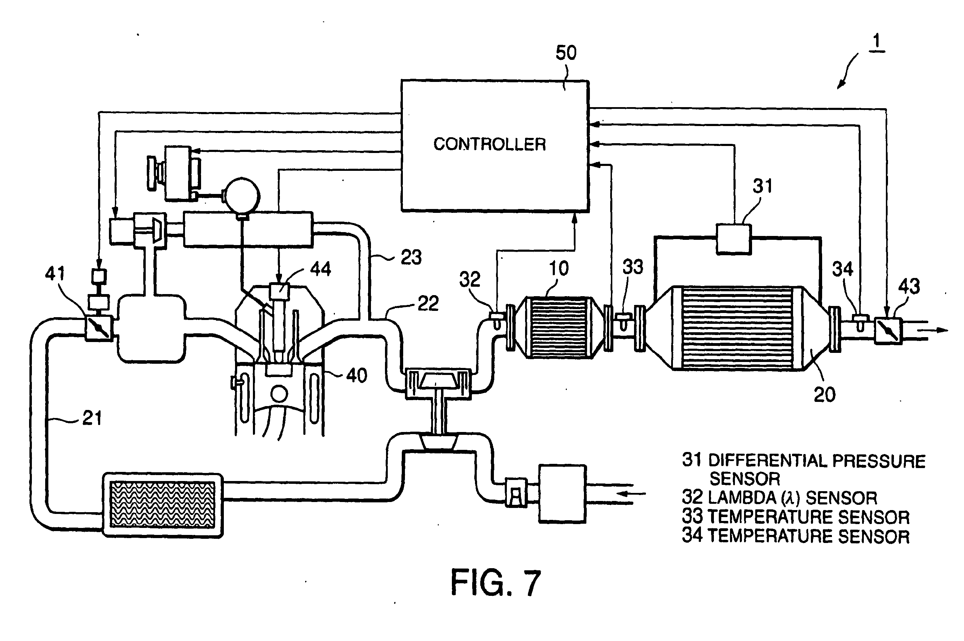

Next, a third embodiment will be described referring to Fig. 7.

The exhaust gas purification device according to this embodiment comprises an exhaust throttle 43 downstream of the DPF 20 of the exhaust pipe 22. The exhaust throttle 43 has an opening which can be varied according to a signal from the controller 50.

When the opening of the exhaust throttle 43 is decreased, the exhaust gas pressure rises, and as a result, the EGR rate increases. When the EGR rate increases, the proportion of fresh air in the intake air amount of the engine 40 decreases, so the excess air factor λ decreases.

On the other hand, if the opening of the exhaust throttle 43 increases, the exhaust gas pressure decreases, and as a result, the EGR rate decreases. When the EGR rate decreases, the proportion of fresh air in the intake air amount of the engine 40 increases, so the excess air factor λ increases.

The remaining features relating to the hardware of the exhaust gas purification device are identical to those of the first embodiment shown in FIG. 1.

The controller 50, by repeating the routine of FIG. 2 and the subroutines of FIGs. 3 and 4 as in the first embodiment, performs elimination of the sulfur poisoning of the NOx trap catalyst 10.

However, the operation of decreasing the excess air factor λ in the step S22 of FIG. 3 and the step S44 of FIG. 4 is performed by decreasing the opening of the exhaust throttle 43. The operation of increasing the excess air factor λ in the step S24 of FIG. 3 and the step S42 of FIG. 4 is performed by increasing the opening of the exhaust throttle 43.

According to this embodiment, elimination of the sulfur poisoning of the NOx trap catalyst 10 can be performed without varying the fuel injection amount.

Next, a fourth embodiment will be described.

The hardware construction of the exhaust gas purification device . according to this embodiment is identical to that of the first embodiment, and the performing of the routine of FIG. 2 and subroutines of FIGs. 3 and 4 is identical to the first embodiment.

However, according to this embodiment, a post-injection is performed by the fuel injector 44 after the fuel injection for ordinary combustion. The operation of decreasing the excess air factor λ in the step S22 of FIG. 3 and the step S44 of FIG. 4 is performed by increasing the post-injection amount. The operation of increasing the excess air factor λ in the step S24 of FIG. 3 and the step S42 of FIG. 4 is performed by decreasing the post-injection amount.

In this way, by controlling the excess air factor λ by increasing or decreasing the post-injection amount, the control response and precision can be improved.

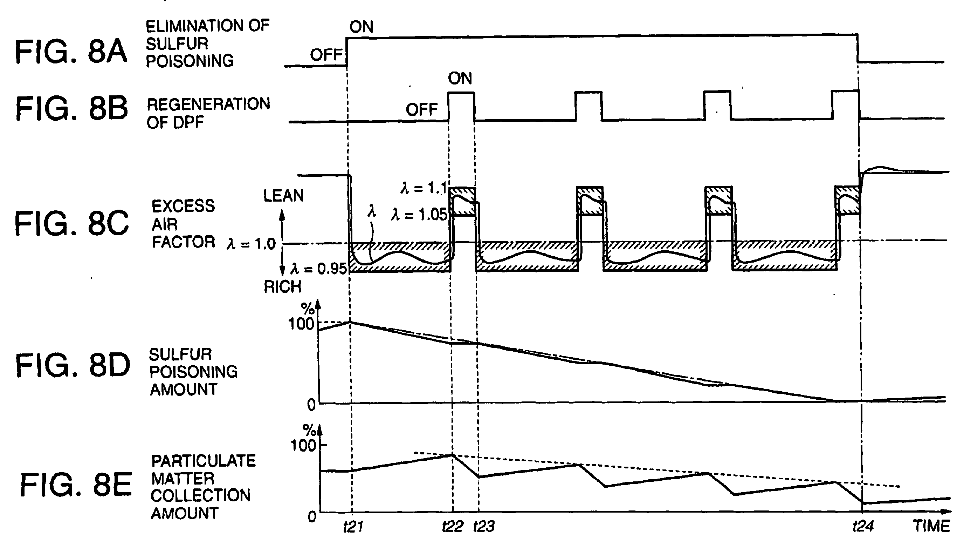

Next, a fifth embodiment will be described referring to FIGs. 8A-8E.

The hardware construction of the exhaust gas purification device according to this embodiment is identical to that of the first embodiment, and the performing of the routine of FIG. 2 and subroutines of FIGs. 3 and 4 is identical to the first embodiment.

However, according to this embodiment, the determination as to whether or not regeneration of the DPF 20 is complete performed in the step S5 of FIG. 2, is performed according to the continuation time of the regeneration control of the DPF 20, i.e., the time from a time *t22* to a time *t23* in the figure, without referring to the differential pressure detected by the differential pressure sensor 31. When the continuation time of the regeneration control of the DPF 20 reaches a predetermined time, the controller 50 determines that regeneration of the DPF 20 is complete.

According to this embodiment, if the predetermined time is set to be long, the particulate matter collection amount of the DPF 20 can be reduced by a larger amount. During regeneration of the DPF 20, sulfur poisoning of the NOx trap catalyst takes place, so if the predetermined time is set to be long, it is preferred to set the continuation time of the elimination of sulfur poisoning overall, i.e., the time from a time *t21* to a time *t24,* to be long.

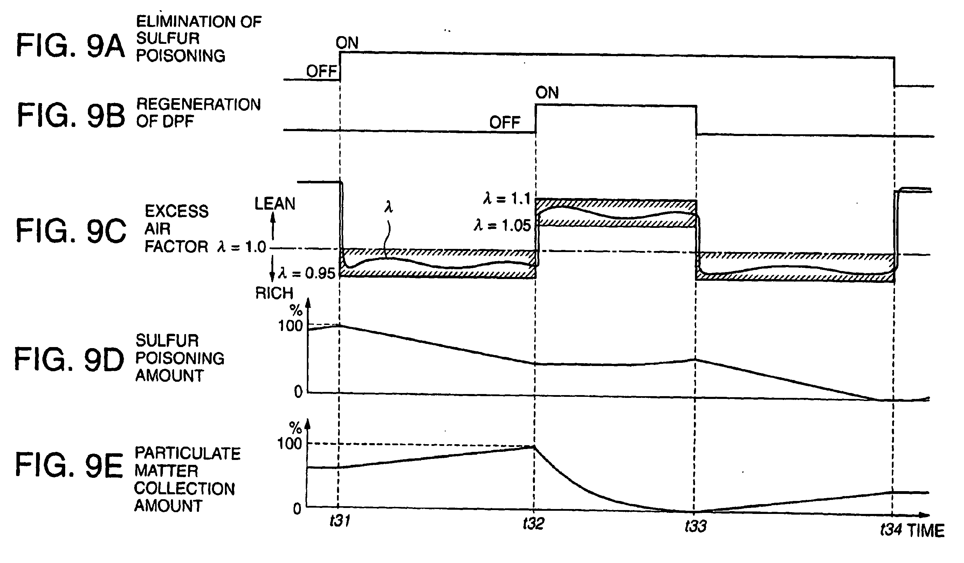

Next, referring to FIGs. 9A-9E, a sixth embodiment will be described.

The hardware construction of the exhaust gas purification device according to this embodiment is identical to that of the first embodiment, and the routine of FIG. 2 and subroutines of FIGs. 3 and 4, are identical to those of the first embodiment.

However, according to this embodiment, the determination of whether or not to perform regeneration of the DPF 20 performed in the step S3 of FIG. 2, and the determination as to whether or not regeneration of the DPF 20 is complete performed in the step S5, are different from the first embodiment.

Specifically, in the step S3, it is determined that regeneration of the DPF 20 is required when the particulate matter collection rate reaches 100%. When, in the step S5, the particulate matter collection rate reaches 0%, it is determined that regeneration of the DPF 20 is complete. These conditions are equivalent to setting the first predetermined value to correspond to 100% and the second predetermined value to correspond to 0% in the first embodiment.

When the conditions of the step S3 and step S5 are set in this way, the minimum occurrence of DPF regeneration is realized during the routine execution period from the time *t31* to the time *t34.*

As a result, as shown in FIG. 9C, the variation frequency of the excess air factor λ is largely reduced compared to the first embodiment, so the effect of sulfur poisoning elimination on the running of the engine 40 can be reduced.

The second-fourth embodiments relating to the means of increasing/decreasing the excess air factor λ, and the fifth and sixth embodiments relating to criteria for regenerating the DPF 20, may be performed in any combination.

## Claims

1. A purification device for an exhaust gas of a diesel engine (40), comprising:
a catalyst (10), which traps nitrogen oxides from the exhaust gas, experiencing a decrease in nitrogen oxides trapping performance when poisoned by sulfur oxides in the exhaust gas which can be eliminated by exposure to an exhaust gas generated from an air-fuel mixture of a rich air-fuel ratio;
a filter (20), which is installed downstream of the catalyst (10), trapping particulate matter in the exhaust gas and buming trapped particulate matter by exposure to an exhaust gas generated from an air-fuel mixture of a lean air-fuel ratio;
an air-fuel ratio regulating mechanism (41, 42, 43, 44) which varies an exhaust gas composition of the engine (40) between a lean and a rich compositions;
a programmable controller (50) programmed to:
determine whether or not the sulfur oxides poisoning elimination of catalyst ( 10) is required;
control the air-fuel ratio regulating mechanism (41, 42, 43, 44) to cause the exhaust gas composition of the engine (40) to be in a state corresponding to the rich air-fuel ratio (S2) when the sulfur oxides poisoning elimination of catalyst (10) is required;
determine whether or not a particulate matter trap amount of the filter (20) has reached a predetermined amount while the exhaust gas composition is in a state corresponding to the rich air-fuel ratio (S3);
control the air-fuel ratio regulating mechanism (41, 42, 43, 44) to cause the exhaust gas composition to be in a state corresponding to the lean air-fuel ratio, when the particulate matter trap amount has reached the predetermined amount during a period when the exhaust gas composition is in a state corresponding to the rich air-fuel ratio (S4);
determine whether or not the particulate matter trap amount has reached a predetermined decrease state during a period when the exhaust gas composition is in the state corresponding to the lean air-fuel ratio (S5); and control the air-fuel ratio regulating mechanism (41, 42, 43, 44) to cause the exhaust gas composition to be in a state corresponding to the rich air-fuel ratio, when the particulate matter trap amount has reached the predetermined decrease state during the period when the exhaust gas composition is in the state corresponding to the lean air-fuel ratio (S2).

2. A purification device according to claim 1, wherein the device further comprises a sensor (31) which detects a differential pressure between an inlet and an outlet of the filter (20) as a value representing a particulate matter trap amount of the filter (20).

3. A purification device according to claim 1 or 2, wherein the state of the exhaust gas composition corresponding to the rich air-fuel ratio, corresponds to an exhaust gas produced by combustion of an air-fuel mixture wherein an excess air factor is within the range 0.95 to 1.0.

4. A purification device according to at least one of the claims 1 to 3, wherein the state of the exhaust gas composition corresponding to the lean air-fuel ratio, corresponds to an exhaust gas produced by combustion of an air-fuel mixture wherein an excess air factor is within the range 1.05 to 1.1.

5. A purification device according to at least one of the claims 1 to 4, wherein the air-fuel ratio regulating mechanism comprises an intake throttle (41) which regulates an intake air amount of the engine (40).

6. A purification device according to at least one of the claims 1 to 4, wherein the air-fuel ratio regulating mechanism comprises a fuel injector (42) which injects fuel into the exhaust gas of the engine (40).

7. A purification device according to at least one of the claims 1 to 4, wherein the engine (40) comprises an exhaust gas recirculation passage (23) which recirculates part of the exhaust gas into an intake air according to an exhaust gas pressure of the engine (40), and the air-fuel ratio regulating mechanism comprises an exhaust throttle (43) which regulates the exhaust gas pressure.

8. A purification device according to at least one of the claims 1 to 4, wherein the engine (40) comprises a fuel injector (42) which supplies fuel for combustion, and the air-fuel ratio regulating mechanism comprises the fuel injector (42) set to perform a post-injection after fuel is supplied for combustion.

9. A purification device according to at least one of the claims 1 to 8, wherein the controller (50) is further programmed to determine that, when the exhaust gas composition of the engine (40) has continued to be in the state corresponding to the lean air-fuel ratio for a predetermined time, the particulate matter trap amount has reached the predetermined decrease state (S5).

10. A purification device according to at least one of the daims 1 to 9, wherein the predetermined amount corresponds to a state where the particulate matter trap amount is saturated, and the predetermined decrease state corresponds to a state where the particulate matter trap amount is zero (S5).

11. A purification device according to at least one of the claims 1 to 9, wherein the predetermined decrease state corresponds to a differential pressure when the controller (50) started to controt the air-fuel ratio regulating mechanism (41, 42, 43, 44) for the first time to cause the exhaust gas composition of the engine (40) to be in the state corresponding to the rich air-fuel ratio.

12. A method for controlling a purification device for an exhaust gas of a diesel engine (40), the device comprising a catalyst (10), which traps nitrogen oxides from the exhaust gas, experiencing a decrease in nitrogen oxides trapping performance when poisoned by sulfur oxides in the exhaust gas which can be eliminated by exposure to an exhaust gas generated from an air-fuel mixture of a rich air-fuel ratio;
a filter (20), which is installed downstream of the catalyst (10), trapping particulate matter in the exhaust gas and burning trapped particulate matter by exposure to an exhaust gas generated from an air-fuel mixture of a lean air-fuel ratio;
an air-fuel ratio regulating mechanism (41, 42, 43, 44) which varies an exhaust gas composition of the engine (40) between a lean and a rich composition; the method comprising:
determining whether or not the sulfur oxides poisoning elimination of catalyst (10) is required;
controlling the air-fuel ratio regulating mechanism (41, 42, 43, 44) to cause the exhaust gas composition of the engine (40) to be in a state corresponding to the rich air-fuel ratio (S2) when the sulfur oxides poisoning elimination of catalyst (10) is required;
determining whether or not a particulate matter trap amount of the filter (20) has reached a predetermined amount while the exhaust gas composition is in a state corresponding to the rich air-fuel ratio (S3);
controlling the mechanism (41, 42, 43, 44) to cause the exhaust gas composition to be in a state corresponding to the lean air-fuel ratio, when the particulate matter trap amount has reached the predetermined amount during a period when the exhaust gas composition is in a state corresponding to the rich air-fuel ratio (S4);
determining whether or not the particulate matter trap amount has reached a predetermined decrease state during a period when the exhaust gas composition is in the state corresponding to the lean air-fuel ratio (S5); and
controlling the mechanism (41) to cause the exhaust gas composition to be in a state corresponding to the rich air-fuel ratio, when the particulate matter trap amount has reached the predetermined decrease state during the period when the exhaust gas composition is in the state corresponding to the lean air-fuel ratio (S2).

## Patentansprüche

1. Reinigungsvorrichtung für ein Abgas eines Dieselmotors (40), die umfasst:
einen Katalysator (10), der Stickoxide aus dem Abgas einfängt und eine Abnahme der Stickoxid-Einfangleistung bei Vergiftung durch Schwefeloxide in dem Abgas erfährt, die durch Kontakt mit einem Abgas beseitigt werden kann, das durch ein Luft-Kraftstoff-Gemisch mit einem fetten Luft-Kraftstoff-Verhältnis erzeugt wird;
einen Filter (20), der hinter dem Katalysator (10) installiert ist und Partikel in dem Abgas einfängt und eingefangene Partikel durch Kontakt mit einem Abgas verbrennt, das durch ein Luft-Kraftstoff-Gemisch mit einem mageren Luft-Kraftstoff-Verhältnis erzeugt wird;
einen Mechanismus (41, 42, 43, 44) zum Regulieren des Luft-Kraftstoff-Verhältnisses, der eine Abgaszusammensetzung des Motors (40) zwischen einer mageren und einer fetten Zusammensetzung variiert;
eine programmierbare Steuerung (50), die so programmiert ist, dass sie
feststellt, ob die Beseitigung der Vergiftung des Katalysators (10) mit Schwefeloxiden erforderlich ist oder nicht;
den Mechanismus (41, 42, 43,44) zum Regulieren des Luft-Kraftstoff-Verhältnisses steuert, um zu bewirken, dass sich die Abgaszusammensetzung des Motors (40) in einem Zustand befindet, der dem fetten Luft-Kraftstoff Verhältnis (S2) entspricht, wenn die Beseitigung der Vergiftung des Katalysators (10) durch Schwefeloxide erforderlich ist;
feststellt, ob eine Partikel-Einfangmenge des Filters (20) eine vorgegebene Menge erreicht hat oder nicht, während sich die Abgaszusammensetzung in einem Zustand befindet, der dem fetten Luft-Kraftstoff-Verhältnis (S3) entspricht;
den Mechanismus (41, 42, 43, 44) zum Regulieren des Luft-Kraftstoff-Verhältnisses steuert, um zu bewirken, dass sich die Abgaszusammensetzung in einem Zustand befindet, der dem mageren Luft-Kraftstoff-Verhältnis entspricht, wenn die Partikel-Einfangmenge die vorgegebene Menge während eines Zeitraums erreicht hat, in dem sich die Abgaszusammensetzung in einem Zustand befindet, der dem fetten Luft-Kraftstoff-Verhältnis entspricht (S4);
feststellt, ob die Partikel-Einfangmenge einen vorgegebenen Abnahmezustand während eines Zeitraums erreicht hat, in dem sich die Abgaszusammensetzung in einem Zustand befindet, der dem mageren Luft-Kraftstoff-Verhältnis (S5) entspricht; und
den Mechanismus (41, 42, 43, 44) zum Regulieren des Luft-Kraftstoff-Verhältnisses steuert, um zu bewirken, dass sich die Abgaszusammensetzung in einem Zustand befindet, der dem fetten Luft-Kraftstoff-Verhältnis entspricht, wenn die Partikel-Einfangmenge den vorgegebenen Abnahmezustand während des Zustandes erreicht hat, in dem sich die Abgaszusammensetzung in dem Zustand befindet, der dem mageren Luft-Kraftstoff-Verhältnis entspricht (S2).

2. Reinigungsvorrichtung nach Anspruch 1, wobei die Vorrichtung des Weiteren einen Sensor (31) umfasst, der eine Druckdifferenz zwischen einem Einlass und einem Auslass des Filters (20) als einen Wert erfasst, der eine Partikel-Einfangmenge des Filters (20) darstellt.

3. Reinigungsvorrichtung nach Anspruch 1 oder 2, wobei der Zustand der Abgaszusammensetzung, der dem fetten Luft-Kraftstoff-Verhältnis entspricht, einem Abgas entspricht, das durch Verbrennung eines Luft-Kraftstoff-Gemischs erzeugt wird, bei dem ein Luftüberschussfaktor in dem Bereich 0,95 bis 1,0 liegt.

4. Reinigungsvorrichtung nach wenigstens einem der Ansprüche 1 bis 3, wobei der Zustand der Abgaszusammensetzung, der dem mageren Luft-Kraftstoff-Verhältnis entspricht, einem Abgas entspricht, das durch Verbrennung eines Luft-Kraftstoff-Gemischs erzeugt wird, bei dem ein Luftüberschussfaktor in dem Bereich 1,05 bis 1,1 liegt.

5. Reinigungsvorrichtung nach wenigstens einem der Ansprüche 1 bis 4, wobei der Mechanismus zum Regulieren des Luft-Kraftstoff-Verhältnisses eine Ansaugdrosselklappe (41) umfasst, die eine Ansaugluftmenge des Motors (40) reguliert.

6. Reinigungsvorrichtung nach wenigstens einem der Ansprüche 1 bis 4, wobei der Mechanismus zum Regulieren des Luft-Kraftstoff-Verhältnisses ein Kraftstoffeinspritzventil (42) umfasst, das Kraftstoff in das Abgas des Motors (40) einspritzt.

7. Reinigungsvorrichtung nach wenigstens einem der Ansprüche 1 bis 4, wobei der Motor (40) einen Abgas-Rückführkanal (23) umfasst, der einen Teil des Abgases gemäß einem Abgasdruck des Motors (40) in die Ansaugluft zurückführt, und der Mechanismus zum Regulieren des Luft-Kraftstoff-Verhältnisses eine Abgasdrosselklappe (43) umfasst, die den Abgasdruck reguliert.

8. Reinigungsvorrichtung nach wenigstens einem der Ansprüche 1 bis 4, wobei der Motor (40) ein Kraftstoffeinspritzventil (42) umfasst, das Kraftstoff zur Verbrennung zuführt, und der Mechanismus zum Regulieren des Luft-Kraftstoff-Verhältnisses das Kraftstoffeinspritzventil (42) umfasst, das so eingestellt ist, dass es eine Nacheinspritzung durchführt, nachdem Kraftstoff zur Verbrennung zugeführt ist.

9. Reinigungsvorrichtung nach wenigstens einem der Ansprüche 1 bis 8, wobei die Steuerung (50) des Weiteren so programmiert ist, dass sie, wenn die Abgaszusammensetzung des Motors (40) über eine vorgegebene Zeit in dem Zustand geblieben ist, der dem mageren Luft-Kraftstoff-Verhältnis entspricht, feststellt, dass die Partikel-Einfangmenge den vorgegebenen Abnahmezustand erreicht hat (S5).

10. Reinigungsvorrichtung nach wenigstens einem der Ansprüche 1 bis 9, wobei die vorgegebene Menge einem Zustand entspricht, in dem die Partikel-Einfangmenge gesättigt ist, und der vorgegebene Abnahmezustand einem Zustand entspricht, in dem die Partikel-Einfangmenge 0 beträgt (S5).

11. Reinigungsvorrichtung nach wenigstens einem der Ansprüche 1 bis 9, wobei der vorgegebene Abnahmezustand einer Druckdifferenz zu der Zeit entspricht, zu der die Steuerung (50) erstmalig begann, den Mechanismus (41, 42, 43, 44) zu steuern, um zu bewirken, dass sich die Abgaszusammensetzung des Motors (40) in dem Zustand befindet, der dem fetten Luft-Kraftstoff Verhältnis entspricht.

12. Verfahren zum Steuern einer Reinigungsvorrichtung für ein Abgas eines Dieselmotors (40), wobei die Vorrichtung einen Katalysator (10) umfasst, der Stickoxide aus dem Abgas einfängt und eine Abnahme der Stickoxid-Einfangleistung bei Vergiftung durch Schwefeloxide in dem Abgas erfährt, die durch Kontakt mit einem Abgas beseitigt werden kann, das durch ein Luft-Kraftstoff-Gemisch mit einem fetten Luft-Kraftstoff-Verhältnis erzeugt wird;
einen Filter (20), der hinter dem Katalysator (10) installiert ist und Partikel in dem Abgas einfängt und eingefangene Partikel durch Kontakt mit einem Abgas verbrennt, das durch ein Luft-Kraftstoff-Gemisch mit einem mageren Luft-Kraftstoff-Verhältnis erzeugt wird;
einen Mechanismus (41, 42, 43, 44) zum Regulieren des Luft-Kraftstoff-Verhältnisses, der eine Abgaszusammensetzung des Motors (40) zwischen einer mageren und einer fetten Zusammensetzung variiert; wobei das Verfahren umfasst:
Feststellen, ob die Beseitigung der Vergiftung des Katalysators (10) durch Schwefeloxide erforderlich ist oder nicht;
Steuern des Mechanismus (41, 42, 43, 44) zum Regulieren des Luft-Kraftstoff Verhältnisses, um zu bewirken, dass sich die Abgaszusammensetzung des Motors (40) in einem Zustand befindet, der dem fetten Luft-Kraftstoff-Verhältnis (S2) entspricht, wenn Beseitigung der Vergiftung des Katalysators (10) durch Schwefeloxide erforderlich ist;
Feststellen, ob eine Partikel-Einfangmenge des Filters (20) eine vorgegebene Menge erreicht hat oder nicht, während sich die Abgaszusammensetzung in einem Zustand befindet, der dem fetten Luft-Kraftstoff-Verhältnis entspricht (S3);
Steuern des Mechanismus (41, 42, 43, 44), um zu bewirken, dass sich die Abgaszusammensetzung in einem Zustand befindet, der dem mageren Luft-Kraftstoff-Verhältnis entspricht, wenn die Partikel-Einfangmenge die vorgegebene Menge während eines Zeitraums erreicht hat, in dem sich die Abgaszusammensetzung in einem Zustand befindet, der dem fetten Luft-Kraftstoff-Verhältnis (S4) entspricht;
Feststellen, ob die Partikel-Einfangmenge einen vorgegebenen Abnahmezustand während eines Zeitraums erreicht hat, in dem sich die Abgaszusammensetzung in dem Zustand befindet, der dem mageren Luft-Kraftstoff-Verhältnis entspricht (S5); und
Steuern des Mechanismus (41) um zu bewirken, dass sich die Abgaszusammensetzung in einem Zustand befindet, der dem fetten Luft-Kraftstoff-Verhältnis entspricht, wenn die Partikel-Einfangmenge den vorgegebenen Abnahmezustand während des Zeitraums erreicht hat, in dem sich die Abgaszusammensetzung in dem Zustand befindet, der dem mageren Luft-Kraftstoff-Verhältnis entspricht (S2).

## Revendications

1. Dispositif d'épuration pour un gaz d'échappement d'un moteur diesel (40), comportant :
un catalyseur (10), qui piège des oxydes d'azote provenant du gaz d'échappement, subissant une baisse de performance de piégeage des oxydes d'azote lorsqu'il est empoisonné par des oxydes de soufre dans le gaz d'échappement qui peuvent être éliminés par une exposition à un gaz d'échappement produit à partir d'un mélange air-carburant ayant un rapport air-carburant riche,
un filtre (20), qui est installé en aval du catalyseur (10), piégeant la matière particulaire dans le gaz d'échappement et brûlant la matière particulaire piégée par exposition à un gaz d'échappement produit à partir d'un mélange air-carburant ayant un rapport air-carburant pauvre,
un mécanisme de régulation de rapport air-carburant (41, 42, 43, 44) qui fait varier une composition de gaz d'échappement du moteur (40) entre une composition pauvre et une composition riche,
une commande programmable (50) programmée pour :
déterminer si l'élimination d'un empoisonnement aux oxydes de soufre du catalyseur (10) est requise ou ne l'est pas,
commander le mécanisme de régulation de rapport air-carburant (41, 42, 43, 44) pour amener la composition de gaz d'échappement du moteur (40) à être dans un état correspondant au rapport air-carburant riche (S2) lorsque l'élimination d'un empoisonnement aux oxydes de soufre du catalyseur (10) est requise,
déterminer si une quantité de matière particulaire piégée du filtre (20) a atteint ou n'a pas atteint une quantité prédéterminée alors que la composition de gaz d'échappement est dans un état correspondant au rapport air-carburant riche (S3),
commander le mécanisme de régulation de rapport air-carburant (41, 42, 43, 44) pour amener la composition de gaz d'échappement à être dans un état correspondant au rapport air-carburant pauvre, lorsque la quantité de matière particulaire piégée a atteint la quantité prédéterminée pendant une période où la composition de gaz d'échappement est dans un état correspondant au rapport air-carburant riche (S4),
déterminer si la quantité de matière particulaire piégée a atteint ou n'a pas atteint un état de baisse prédéterminé pendant une période où la composition de gaz d'échappement est dans l'état correspondant au rapport air-carburant pauvre (S5), et
commander le mécanisme de régulation de rapport air-carburant (41, 42, 43, 44) pour amener la composition de gaz d'échappement à être dans un état correspondant au rapport air-carburant riche, lorsque la quantité de matière particulaire piégée a atteint l'état de baisse prédéterminé pendant la période où la composition de gaz d'échappement est dans l'état correspondant au rapport air-carburant pauvre (S2).

2. Dispositif d'épuration selon la revendication 1, dans lequel le dispositif comporte également un capteur (31) qui détecte une pression différentielle entre une entrée et une sortie du filtre (20) en tant que valeur représentant une quantité de matière particulaire piégée du filtre (20).

3. Dispositif d'épuration selon la revendication 1 ou 2, dans lequel l'état de la composition de gaz d'échappement correspondant au rapport air-carburant riche, correspond à un gaz d'échappement produit par une combustion d'un mélange air-carburant dans lequel un facteur d'excès d'air se situe dans la plage allant de 0,95 à 1,0.

4. Dispositif d'épuration selon au moins l'une des revendications 1 à 3, dans lequel l'état de la composition de gaz d'échappement correspondant au rapport air-carburant pauvre, correspond à un gaz d'échappement produit par une combustion d'un mélange air-carburant dans lequel un facteur d'excès d'air se situe dans la plage allant de 1,05 à 1,1.

5. Dispositif d'épuration selon au moins l'une des revendications 1 à 4, dans lequel le mécanisme de régulation de rapport air-carburant comporte un papillon d'admission (41) qui régule une quantité d'air d'admission du moteur (40).

6. Dispositif d'épuration selon au moins l'une des revendications 1 à 4, dans lequel le mécanisme de régulation de rapport air-carburant comporte un injecteur de carburant (42) qui injecte du carburant dans le gaz d'échappement du moteur (40).

7. Dispositif d'épuration selon au moins l'une des revendications 1 à 4, dans lequel le moteur (40) comporte un passage de retour de gaz d'échappement (23) qui remet en circulation une partie du gaz d'échappement dans de l'air d'admission en fonction d'une pression de gaz d'échappement du moteur (40), et le mécanisme de régulation de rapport air-carburant comporte un papillon d'échappement (43) qui régule la pression de gaz d'échappement.

8. Dispositif d'épuration selon au moins l'une des revendications 1 à 4, dans lequel le moteur (40) comporte un injecteur de carburant (42) qui délivre du carburant pour une combustion, et le mécanisme de régulation de rapport air-carburant comporte l'injecteur de carburant (42) réglé pour effectuer une post-injection après que du carburant ait été délivré pour une combustion.

9. Dispositif d'épuration selon au moins l'une des revendications 1 à 8, dans lequel la commande (50) est également programmée pour déterminer, lorsque la composition de gaz d'échappement du moteur (40) a continué à être dans l'état correspondant au rapport air-carburant pauvre pendant une durée prédéterminée, que la quantité de matière particulaire piégée a atteint l'état de baisse prédéterminé (S5).

10. Dispositif d'épuration selon au moins l'une des revendications 1 à 9, dans lequel la quantité prédéterminée correspond à un état où la quantité de matière particulaire piégée est saturée, et l'état de baisse prédéterminé correspond à un état où la quantité de matière particulaire piégée est égale à zéro (S5).

11. Dispositif d'épuration selon au moins l'une des revendications 1 à 9, dans lequel l'état de baisse prédéterminé correspond à une pression différentielle lorsque la commande (50) a été lancée pour commander le mécanisme de régulation de rapport air-carburant (41, 42, 43, 44) pour la première fois pour amener la composition de gaz d'échappement du moteur (40) à être dans l'état correspondant au rapport air-carburant riche.

12. Procédé pour commander un dispositif d'épuration pour un gaz d'échappement d'un moteur diesel (40), le dispositif comportant un catalyseur (10), qui piège des oxydes d'azote provenant du gaz d'échappement, subissant une baisse de performance de piégeage des oxydes d'azote lorsqu'il est empoisonné par des oxydes de soufre dans le gaz d'échappement qui peuvent être éliminés par une exposition à un gaz d'échappement produit à partir d'un mélange air-carburant ayant un rapport air-carburant riche,
un filtre (20), qui est installé en aval du catalyseur (10), piégeant la matière particulaire dans le gaz d'échappement et brûlant la matière particulaire piégée par exposition à un gaz d'échappement produit à partir d'un mélange air-carburant ayant un rapport air-carburant pauvre,
un mécanisme de régulation de rapport air-carburant (41, 42, 43, 44) qui fait varier une composition de gaz d'échappement du moteur (40) entre une composition pauvre et une composition riche, le procédé comportant les étapes consistant à :
déterminer si l'élimination d'un empoisonnement aux oxydes de soufre du catalyseur (10) est requise ou ne l'est pas,
commander le mécanisme de régulation de rapport air-carburant (41, 42, 43, 44) pour amener la composition de gaz d'échappement du moteur (40) à être dans un état correspondant au rapport air-carburant riche (S2) lorsque l'élimination d'un empoisonnement aux oxydes de soufre du catalyseur (10) est requise,
déterminer si une quantité de matière particulaire piégée du filtre (20) a atteint ou n'a pas atteint une quantité prédéterminée alors que la composition de gaz d'échappement est dans un état correspondant au rapport air-carburant riche (S3),
commander le mécanisme (41, 42, 43, 44) pour amener la composition de gaz d'échappement à être dans un état correspondant au rapport air-carburant pauvre, lorsque la quantité de matière particulaire piégée a atteint la quantité prédéterminée pendant une période où la composition de gaz d'échappement est dans un état correspondant au rapport air-carburant riche (S4),
déterminer si la quantité de matière particulaire piégée a atteint ou n'a pas atteint un état de baisse prédéterminé pendant une période où la composition de gaz d'échappement est dans l'état correspondant au rapport air-carburant pauvre (S5), et
commander le mécanisme (41) pour amener la composition de gaz d'échappement à être dans un état correspondant au rapport air-carburant riche, lorsque la quantité de matière particulaire piégée a atteint l'état de baisse prédéterminé pendant la période où la composition de gaz d'échappement est dans l'état correspondant au rapport air-carburant pauvre (S2).
